# EUROPÄISCHE PATENTSCHRIFT

(11) **EP 3 869 935 B1**
(45) Veröffentlichungstag und Bekanntmachung des Hinweises auf die Patenterteilung: **03.07.2024**
(21) Anmeldenummer: 19794895.3
(22) Anmeldetag: 10.10.2019
(51) Int. Cl.: A01D 25/00, A01D 25/04

(54) **RODEVORRICHTUNG ZUM RODEN VON HACKFRÜCHTEN**
HARVESTING DEVICE FOR HARVESTING ROOT CROPS
DISPOSITIF D'ARRACHAGE DESTINÉ À ARRACHER DES PLANTES RACINES

(30) Priorität: 22.10.2018 DE 102018126211
(43) Veröffentlichungstag der Anmeldung: 01.09.2021
(73) Patentinhaber: Grimme Landmaschinenfabrik GmbH & Co. KG, 49401 Damme (DE)
(72) Erfinder: PFLIPSEN, Klaus, 49401 Damme (DE)
(74) Vertreter: Wischmeyer, André
(86) Internationale Anmeldenummer: PCT/EP2019/077529
(87) Internationale Veröffentlichungsnummer: WO 2020/083659

(56) Entgegenhaltungen:
- DE-A1- 2 701 118
- DE-A1- 2 942 717
- DE-A1- 3 233 398
- DE-A1-102005 049 652

## Beschreibung

Die Erfindung betrifft eine Rodevorrichtung zum Roden von Hackfrüchten. Die Rodevorrichtung weist mindestens eine Rodescharhalterung auf, die zumindest ein Rodeschar abstützt. Das Rodeschar hat einen in eine Roderichtung vorderen Aufnahmebereich und einen in der Roderichtung hinteren Auswurfbereich für die Hackfrüchte. Die Rodescharhalterung ist mit einem Rodevorrichtungsrahmen gekoppelt und im Betrieb davon in die Roderichtung gezogen. Die Rodescharhalterung ist relativ zum Rodevorrichtungsrahmen und betrachtet in Roderichtung aus einer Ausgangsstellung seitlich in eine Versatzstellung bewegbar.

Im Betrieb wird die Rodevorrichtung in die Roderichtung über einen Acker, auf dem die Hackfrüchte angebaut sind, fortbewegt. Die Rodeschare tauchen dabei teilweise in den Erdboden ein, nehmen die Hackfrüchte im Aufnahmebereich auf und heben sie an. Anschließend werden die Hackfrüchte vom Auswurfbereich des Rodeschares entfernt. Die Rodescharhalterung ist dabei quer zur Roderichtung beweglich, um einer Hackfruchtreihe, dessen Verlauf lokal von der Roderichtung abweicht, folgen zu können.

Aus dem Stand der Technik bekannt sind derartige Rodevorrichtungen, bei denen die Rodescharhalterung relativ zum Rodevorrichtungsrahmen schwenkbeweglich um eine in Roderichtung vorlaufende Schwenkachse und ansonsten fixiert angeordnet ist. Nachteilig an diesem Aufbau ist, dass die Hackfrüchte im Betrieb an sich lokal signifikant unterscheidenden Positionen aus dem Auswurfbereich abgegeben werden, wodurch sich im Betrieb insbesondere eine ungleichmäßige Verteilung der Hackfrüchte auf einer dem Rodeschar nachfolgenden Fördereinrichtung einstellt. Weiterhin kann das Rodeschar im Betrieb dem Verlauf der Hackfruchtreihe nur in einem geringen Umfang folgen, wobei eine mit seiner seitlichen Bewegung einhergehende signifikante Schrägstellung des Rodeschares das Anheben der Hackfrüchte beeinträchtigt. Insbesondere bei Einsatz eines seitlich unbeweglichen Auswerfers zum Auswerfen der Hackfrüchte von dem zumindest einen Rodeschar weg ist die seitliche Beweglichkeit der Rodescharhalterung und damit des Aufnahmebereichs zudem noch weiter begrenzt.

Aus der DE 32 33 398 A1 ist eine Rüben-Rodeeinrichtung bekannt. Diese weist ein nach hinten förderndes Hubrad-Paar und eine Führungseinrichtung zur Führung der Rüben auf.

Aufgabe der vorliegenden Erfindung ist die Bereitstellung einer gattungsgemäßen Rodevorrichtung mit einer erhöhten Rodeleistung bei gesteigerter Auslastung. Insbesondere soll der Anteil von im Betrieb vom Erdboden unbeschädigt aufzunehmenden Hackfrüchten erhöht und die Ausfallzeiten der Rodevorrichtung verringert werden.

Erfindungsgemäß wird die Aufgabe durch eine gattungsgemäße Rodevorrichtung gelöst, die zur Führung der Rodescharhalterung eine Führungsanordnung aufweist. Diese ist derart ausgebildet, dass bei der Bewegung der Rodescharhalterung aus der Ausgangsstellung in die Versatzstellung der Aufnahmebereich seitlich weiter verlagert wird als der Auswurfbereich.

Die Rodevorrichtung dient der Aufnahme von Hackfrüchten, insbesondere von Rüben, Kartoffeln oder Karotten, aus dem Erdboden und insbesondere der Weiterführung der Hackfrüchte an auf die Rodevorrichtung folgende Fördereinrichtungen. Die Rodevorrichtung hat dabei bevorzugt mehrere, insbesondere sechs bis zwölf, Rodescharhalterungen, die in Roderichtung nebeneinander angeordnet und mit dem Rodevorrichtungsrahmen gekoppelt sind. Insbesondere wird die erfindungsgemäße Rodevorrichtung als vorzugsweise vorlaufender Teil einer mobilen Erntemaschine eingesetzt. Im Betrieb ist jede Rodescharhalterung einer Reihe von Hackfrüchten zugeordnet, welche sich zumindest global bzw. zumindest im Wesentlichen in Roderichtung erstreckt.

Der Begriff Rodeschar ist in der Praxis mit unterschiedlichen Artikeln gebräuchlich, insbesondere ist das erfindungsgemäße Rodeschar im Stand der Technik bedeutungsgleich auch als die oder der Rodeschar bezeichnet.

Im Betrieb erreicht zunächst der Aufnahmebereich des Rodeschares die zu erntenden Hackfrüchte. Daraufhin wird von dem Rodeschar eine Kraft auf die Hackfrüchte aufgebracht, durch welche diese aus dem Erdboden gelöst und insbesondere aufwärts transportiert werden. Der Aufnahmebereich ist insbesondere der Bereich des Rodeschares, welcher beim Roden den Hackfrüchten zugewandt ist und beim Roden bevorzugt zuerst mit den zu erntenden Hackfrüchten zusammenwirkt bzw. Kontakt dazu aufbaut. Der Aufnahmebereich ist dabei bevorzugt ein relativ zur Rodescharhalterung ortsfester Bereich des relativ zur Rodescharhalterung ortsfesten oder umlaufenden Rodeschares. Insbesondere ist das Rodeschar dabei zumindest im Betrieb nicht verschieblich gegenüber der Rodescharhalterung, bevorzugt außerhalb des Betriebes dessen Position bzw. die Position von einer Rodescharumlaufachse gegenüber der Rodescharhalterung veränderbar. Dabei ist das Rodeschar insbesondere lösbar an der Rodescharhalterung befestigt oder alternativ vorzugsweise einstückig mit der Rodescharhalterung ausgebildet.

Der Auswurfbereich des Rodeschares ist ebenso wie der Aufnahmebereich ein relativ zur Rodescharhalterung ortsfester Bereich des Rodeschares, von dem die Hackfrüchte ausgeworfen, d. h. von dem Rodeschar getrennt und davon entfernt werden. Zum Auswerfen wird dabei insbesondere ein Auswurfelement genutzt, das die Hackfrüchte mit einer zumindest anteilig vom Aufnahmebereich zur Umgebung, insbesondere entgegen der Roderichtung, gerichteten Auswurfkraft beaufschlagt. Im Betrieb ist der Aufnahmebereich des Rodeschares insbesondere unterhalb der Erdoberfläche angeordnet, wobei der Auswurfbereich oberhalb der Erdoberfläche angeordnet ist.

Die Rodescharhalterung ist insbesondere als starrer Hebel oder starre Strebe ausgebildet und dient der Kraftübertragung von dem Rodevorrichtungsrahmen auf das zumindest eine Rodeschar. Insbesondere in der Ausgangsstellung erstreckt sich die Rodescharhalterung bevorzugt hauptsächlich in einer Rahmenlängsebene oder einer dazu parallelen oder darin angeordneten Richtung und wird insbesondere von der Rahmenlängsebene mittig geschnitten. Die Rahmenlängsebene ist dabei insbesondere rechtwinklig zu einer Aufstandsfläche der die Rodevorrichtung aufweisenden Erntemaschine. Insbesondere ist die Rodescharhalterung in der Ausgangsstellung relativ zur Rahmenlängsebene zumindest im Wesentlichen, insbesondere exakt spiegelsymmetrisch ausgebildet.

Die Roderichtung ist insbesondere die Richtung, in welche sich der Rodevorrichtungsrahmen im Betrieb fortbewegt und damit insbesondere die Fahrtrichtung einer die Rodevorrichtung umfassenden Erntemaschine. Die Roderichtung ist vorzugsweise horizontal und parallel zu einer Längsmittelachse der Rodevorrichtung. Die Reihen der zu erntenden Hackfrüchte verlaufen im Betrieb zwar in der Regel im Wesentlichen parallel zur Roderichtung, weichen lokal jedoch seitlich, d. h. quer zur Roderichtung, davon ab. Somit liegen die idealen Hackfruchtpositionen von derselben Reihe zugehörigen Hackfrüchten zwar auf einer Linie, insbesondere einer zur Roderichtung parallen Geraden, weichen bedingt durch ungleichmäßiges Wachstum der Hackfrüchte jedoch beim Ernten die tatsächlichen Hackfruchtpositionen seitlich von dieser Linie ab.

Um trotz dieser Abweichungen einen möglichst großen Anteil von den Hackfrüchten durch das Rodeschar aufnehmen zu können und der Reihe von Hackfrüchten folgen zu können, ist die Rodescharhalterung relativ zum Rodevorrichtungsrahmen aus der Ausgangsstellung seitlich in die Versatzstellung bewegbar. Bevorzugt ist der Rodevorrichtungsrahmen im Betrieb kontinuierlich oder stufenweise seitlich in die Versatzstellung beweglich. Insbesondere bei einer Mehrzahl von Rodescharhalterungen der Rodevorrichtung können diese jeweils der ihr zugeordneten Reihe folgen, während der Rahmen lediglich in Roderichtung fortbewegt wird. In der Ausgangsstellung ist die Rodescharhalterung so ausgerichtet, dass die Hackfrüchte, deren tatsächliche Hackfruchtposition der idealen entspricht, im Betrieb optimal geerntet werden. Die vorgenannte, gedachte Linie verläuft dabei zumindest teilweise in oder durch die Rahmenlängsachse.

Die Rodescharhalterung hat insbesondere zwei Versatzstellungen, zu deren Erreichen die Rodescharhalterung aus der Ausgangsstellung zu unterschiedlichen Seiten beweglich ist. Insbesondere befindet sich die Rodescharhalterung in einer Versatzstellung in Fahrtrichtung rechts der Ausgangsstellung und in der anderen Versatzstellung links der Ausgangsstellung. Bei der Bewegung aus der Ausgangsstellung in die Versatzstellung wird das Rodeschar somit zumindest anteilig in eine Querrichtung bewegt, die horizontal und rechtwinklig zur Roderichtung angeordnet ist. Insbesondere kann die Rodescharhalterung sowohl in die Querrichtung in eine Versatzstellung als auch entgegen der Querrichtung aus der Ausgangsstellung in eine gegenüberliegende Versatzstellung überführt werden. Somit lassen sich sowohl links als auch rechts von der für die Rodevorrichtung optimalen Hackfruchtposition angeordnete Hackfrüchte im Betrieb aufnehmen.

Im Betrieb wird die Rodescharhalterung vom Rodevorrichtungsrahmen gezogen. Der Rodevorrichtungsrahmen befindet sich dazu zumindest abschnittsweise in Roderichtung vor der Rodescharhalterung, die daran beweglich befestigt ist. Durch den Rodevorrichtungsrahmen wird insbesondere eine Zugkraft auf die Rodescharhalterung aufgebracht. Die Rodescharhalterung ist dem Rodevorrichtungsrahmen im Betrieb nachlaufend ausgebildet, wodurch die Rodescharhalterung insbesondere bei geradliniger Fortbewegung der Rodevorrichtung in die Roderichtung und bei ausbleibenden Querkräften auf die Rodeschare oder die Rodescharhalterung bevorzugt automatisch in die Ausgangsstellung zurückgestellt wird. Insbesondere wird die Rückstellung zumindest anteilig dadurch bewirkt, dass die Rodescharhalterung mit dem zumindest einen Rodeschar in der Ausgangsstellung die geringste potentielle Energie hat, wodurch im Betrieb, insbesondere beim Ausheben des Rodeschars aus dem Boden die Schwerkraft eine Rückführung in die Ausgangsstellung bewirkt.

Die Führungsanordnung befindet sich insbesondere zwischen der Rodescharhalterung und dem Rodevorrichtungsrahmen. Bestandteile der Führungsanordnung sind dabei insbesondere ortsfest relativ zur Rodescharhalterung oder zum Rodevorrichtungsrahmen bzw. einteilig damit. Durch die Führungsanordnung wird die Rodescharhalterung bei der seitlichen Bewegung aus der Ausgangsstellung in die Versatzstellung geführt und dadurch in der Versatzstellung so positioniert, dass der Aufnahmebereich des Rodeschares in die Querrichtung und relativ zu seiner Position in der Ausgangsstellung weiter verlagert ist als der Auswurfbereich in die Querrichtung relativ zu seiner Position in der Ausgangsstellung. Durch die Ausbildung der Führungsanordnung und die damit einhergehende Beweglichkeit des Aufnahmebereichs in der Querrichtung lassen sich auch weit von ihrer idealen Hackfruchtposition entfernt positionierte Hackfrüchte durch das Rodeschar aufnehmen, wobei der Auswurfbereich des Rodeschares nur geringfügig von seiner Position in der Ausgangsstellung abweicht. Dadurch ist zum einen ein größerer Anteil der im Boden befindlichen Hackfrüchte durch die Rodevorrichtung aufzunehmen und gleichzeitig gewährleistet, dass die Hackfrüchte von dem Rodeschar an einer weitgehend gleichbleibenden Position und damit lokal kontinuierlich ausgeworfen werden. Die Rodeleistung kann somit sowohl durch eine größere Anpassungsfähigkeit der Rodescharhalterung mit dem Rodeschar an die zu erntenden Hackfrüchte als auch durch eine dadurch nur geringfügige ausgelöste seitliche Verlagerung des Auswurfbereichs erhöht werden. Durch diese wird eine auf das Rodeschar folgende Fördereinrichtung insbesondere bei einer Mehrzahl von Rodescharhalterungen nebeneinander gleichmäßig mit Hackfrüchten bestückt, somit besser ausgelastet und die Rodegeschwindigkeit limitierende lokale Verstopfungen vermieden.

Bevorzugt umfasst die Führungsanordnung Sensoren zur Ermittlung der Position der zu erntenden Hackfrüchte, bevor diese den Aufnahmebereich erreichen. Anhand von Sensordaten kann anschließend die Rodescharhalterung durch von der Führungsanordnung umfasste Aktoren seitlich bewegt werden. Durch diesen Aufbau lässt sich die Rodevorrichtung hoch aufgelöst und schnell an der zu rodenden Reihe von Hackfrüchten orientieren und dadurch ein besonders hoher Anteil der zu erntenden Hackfrüchte unbeschadet roden.

Alternativ ist die Rodescharhalterung bevorzugt derart an den Rodevorrichtungsrahmen gekoppelt, dass die Bewegung aus der Ausgangsstellung in die Versatzstellung und zurück im Betrieb automatisch stattfindet. Insbesondere wird die Bewegung lediglich durch die Reihe von Hackfrüchten und von den Hackfrüchten auf das Rodeschar ausgeübte Querkräfte ausgelöst. Bevorzugt wird die Rodescharhalterung durch einen Kontakt des Rodeschares mit zumindest einer Hackfrucht dabei in die Querrichtung zumindest teilweise verdrängt. Dabei ist die Rodevorrichtung insbesondere frei von einem verstellbaren und die Rodescharhalterung aktiv in die Querrichtung verlagernden Aktor. Vorteil dieser Ausgestaltung ist eine geringere Fehleranfälligkeit der Rodevorrichtung und damit geringere Ausfallzeiten derer. Durch die vorbeschriebene Führungsanordnung ist für eine seitliche Bewegung des Aufnahmebereiches ein geringeres Massenträgheitsmoment des Rodeschares zu überwinden, wodurch im Betrieb für eine Bewegung der Rodescharhalterung geringere Kräfte zwischen dieser und den Hackfrüchten wirken.

Erfindungsgemäß ist die Führungsanordnung derart ausgebildet, dass die Rodevorrichtung eine relativ zu einer Horizontalen verschwenkte und in der vertikalen Rahmenlängsebene in Roderichtung hinter der Rodescharhalterung angeordnete Schwenkachse hat. Um diese gedachte, geometrische Schwenkachse wird die Rodescharhalterung bei der Bewegung aus der Ausgangsstellung in die Versatzstellung zumindest anteilig verschwenkt. Die Schwenkachse ist dabei insbesondere rechtwinklig zur Horizontalen und insbesondere ebenso rechtwinklig zur Roderichtung. Durch diese Anordnung der Schwenkachse wird bei der Bewegung der Rodescharhalterung aus der Ausgangsstellung in die Versatzstellung der in Roderichtung vordere Aufnahmebereich insbesondere weiter quer zur Rahmenlängsebene bewegt als der in Förderrichtung hintere Auswurfbereich. Durch die Anordnung der Schwenkachse und insbesondere einen geringen Abstand derer zum Rodeschar bzw. zum Auswurfbereich dessen wird besonders zuverlässig und unter Ermöglichung einer konstruktiv einfachen Ausführung der Erfindung erreicht, dass die Position des Auswurfbereiches relativ zur Bewegung des Rodeschares weitgehend konstant ist. Insbesondere ist die Verschwenkung der Rodescharhalterung um die Schwenkachse bei der Bewegung der Rodescharhalterung aus der Ausgangsstellung in die Versatzstellung überlagert durch eine Verschwenkung der Rodescharhalterung um eine weitere Achse oder eine Verschiebung der Rodescharhalterung. Dadurch lässt sich die Bewegungscharakteristik des Rodeschares zugunsten der Rodeleistung weiter optimieren und insbesondere im Betrieb zusätzlich zu den genannten Vorteilen eine automatische Rückstellung in die Ausgangsstellung erreichen.

Erfindungsgemäß hat die Rodevorrichtung zusätzlich eine zur Roderichtung parallele Kippachse. Um diese gedachte, geometrische Kippachse kippt die Rodescharhalterung bei der Bewegung aus der Ausgangsstellung in die Versatzstellung zumindest anteilig. Dabei ist die Kippachse in Roderichtung betrachtet insbesondere oberhalb des Rodeschares angeordnet. Diese Ausgestaltung ist insbesondere dann vorteilhaft, wenn der Auswurfbereich in vertikaler Richtung oberhalb des Aufnahmebereichs angeordnet ist. Durch die Verkippung um die Kippachse wird erreicht, dass der untere Bereich des Rodeschares bei seiner seitlichen Bewegung weiter in die Querrichtung ausweicht als der Auswurfbereich und/oder ein Lagerungspunkt des Rodeschares. Insbesondere ist dadurch die Bewegung derart optimiert, dass der Aufnahmebereich bzw. die Unter- oder Vorderseite des Rodeschares in der Versatzstellung gegenüber der Ausgangsstellung am weitesten seitlich bewegt ist. Dabei wird durch die Verkippung des Rodeschares erreicht, dass die Hackfrüchte unmittelbar nach deren Aufnahme aus dem Erdboden zumindest anteilig in die Querrichtung in Richtung der Rahmenlängsebene geleitet werden, um die Hackfrüchte bei einer Mehrzahl von Rodescharhalterungen über die Breite der Rodevorrichtung möglichst gleich verteilt auf die Rodeschare folgendes Förderelement abgeben zu können. Dieses ist dadurch gleichmäßig hoch ausgelastet, wodurch die Rodeleistung insgesamt erhöht werden kann. Außerdem ist das für die Bewegung der Rodescharhalterung, insbesondere des Aufnahmebereiches, zu überwindende Massenträgheitsmoment verringert.

Besonders bevorzugt ist die Führungsanordnung derart ausgebildet, dass die Rodescharhalterung zumindest anteilig schwenkbar um eine Diagonalschwenkachse ist, welche zumindest in der Ausgangsstellung in der Rahmenlängsebene liegt und in Förderrichtung ansteigt. Insbesondere ist die Diagonalschwenkachse zumindest im Wesentlichen rechtwinklig zu einer Geraden, welche den Aufnahmebereich und den Auswurfbereich des Rodeschares in der Ausgangsstellung schneidet. Durch die Position der Schwenkachse ist die Bewegung des Rodeschares aus der Ausgangsstellung in die Versatzstellung weiter optimiert und insbesondere nur ein verringerter Kraftaufwand für eine signifikante Bewegung des Aufnahmebereichs in die Querrichtung notwendig.

Die Diagonalschwenkachse, die Schwenkachse und/oder die Kippachse sind insbesondere in der Ausgangsstellung in der Rahmenlängsebene angeordnet. Bevorzugt bewegen sie sich bei der Bewegung der Rodescharhalterung in die Versatzstellung aus der Rahmenlängsebene hinaus und sind somit dynamisch. Vorzugsweise schwenkt die Rodescharhalterung bei der Bewegung aus der Ausgangsstellung in die Versatzstellung zumindest anteilig um drei unterschiedliche und zueinander jeweils rechtwinklige Raumachsen, insbesondere die drei Raumrichtungen. Dadurch lässt sich die Bewegung insofern optimieren, als dass der Aufnahmebereich möglichst weit in Querrichtung verlagert wird, während der Auswurfbereich möglichst um seine Position in der Ausgangsstellung verbleibt, wobei durch eine vom Erdboden auf das Rodeschar in der Versatzstellung aufgebrachte Querkraft zusammen mit einer entgegen der Roderichtung wirkenden Rodewiderstandskraft die Rodescharhalterung bei Nichtvorliegen von seitlich der Rahmenlängsebene angeordneten, zu erntenden Hackfrüchten sich selbst in die Ausgangsstellung zentriert.

Bevorzugt wird das Rodeschar bei der Bewegung aus der Ausgangsstellung in die Versatzstellung zumindest abschnittsweise in Roderichtung verlagert. Insbesondere schwenkt die Rodescharhalterung dazu um eine in Roderichtung vor der Rodescharhalterung bzw. vor dem Rodeschar angeordnete Vorderschwenkachse, welche zumindest in der Ausgangsstellung in der Rahmenlängsebene angeordnet und insbesondere in Förderrichtung abfallend bzw. rechtwinklig zur Förderrichtung angeordnet ist. Durch diese Ausgestaltung wird auf konstruktiv einfache Weise erreicht, dass die Rodescharhalterung nach vorne verlagert wird, wodurch in der Versatzstellung durch die entgegen der Roderichtung wirkenden Rodewiderstandskraft eine Selbstzentrierung der Rodescharhalterung in die Ausgangsstellung insbesondere bei ausbleibenden zu erntenden Hackfrüchten erreicht ist. Durch die automatische Zentrierung findet eine automatische Rückstellung des Rodeschares in die Ausgangsstellung statt, in der das Rodeschar sich im Betrieb zeitlich am häufigsten befindet, wodurch Zeiten zur manuellen Einstellung der Rodescharhalterung vor Beginn des Rodens einer neuen Reihe von Hackfrüchten minimiert werden.

Vorzugsweise umfasst die Führungsanordnung mehrere insbesondere als Gelenklager ausgebildete Führungslager zwischen der Rodescharhalterung und dem Rodevorrichtungsrahmen. Insbesondere ist die Rodescharhalterung einzig mittels dieser Führungslager an dem Rodevorrichtungsrahmen befestigt. Die Bestandteile der Führungslager, insbesondere ein Gelenklagerkopf und/oder eine Gelenklagerpfanne, sind dabei bevorzugt ortsfest relativ zur Rodescharhalterung oder ortsfest relativ zum Rodevorrichtungsrahmen angeordnet oder damit einstückig. Gelenklager sind insbesondere dadurch gekennzeichnet, dass die Lagerpartner über zwei unterschiedliche Schwenkachsen zueinander verschwenkbar sind, wobei insbesondere eine Verschiebung der Gelenkpartner zueinander verhindert wird. Durch die Verwendung zumindest eines Gelenklagers ist die Kraftübertragung von der Rodescharhalterung auf den Rodevorrichtungsrahmen konstruktiv einfach ermöglicht und gleichzeitig eine komplexe Bewegung der Rodescharhalterung gegenüber dem Rodevorrichtungsrahmen ermöglicht. Dadurch ist die Zuverlässigkeit und somit die Leistungsfähigkeit der Rodevorrichtung weiter erhöht.

Insbesondere ist zumindest in der Ausgangsstellung zumindest eines der als Gelenklager ausgebildeten Führungslager mittig, d. h. in der Rahmenlängsebene angeordnet. Dadurch ist insbesondere eine Verschwenkung der Rodescharhalterung aus der Ausgangsstellung um unterschiedliche Schwenkachsen ermöglicht, wobei die Rodescharhalterung sowohl in Querrichtung als auch entgegen der Querrichtung einen gleichen, d. h. an der Rahmenlängsebene gespiegelten, Bewegungsablauf hat. Dadurch sind sowohl rechts als auch links von der Rahmenlängsebene positionierte, zu rodende Hackfrüchte gleichermaßen gut durch das Rodeschar und insbesondere dessen Aufnahmebereich erreichbar.

Vorzugsweise ist die Rodescharhalterung mittels dreier Führungslager gelagert. Diese Führungslager spannen eine Lagerebene auf, die zumindest in der Ausgangsstellung, insbesondere auch in der Versatzstellung, zu der Rahmenlängsebene verschwenkt ist. Das bedeutet, dass zumindest zwei der drei Führungslager quer zur Roderichtung voneinander beabstandet sind und insbesondere zu unterschiedlichen Seiten der Rahmenlängsebene angeordnet sind. Insbesondere sind die drei Führungslager als Schwenklager ausgebildet und das von den Führungslagern aufgespannte Dreieck spiegelsymmetrisch relativ zur Rahmenlängsebene. Durch diese Anordnung ist eine besonders stabil geführte Bewegung der Rodescharhalterung aus der Ausgangsstellung in die Versatzstellung ermöglicht und sind Kräfte in unterschiedliche Raumrichtungen besonders zuverlässig von der Rodescharhalterung auf den Rodevorrichtungsrahmen übertragbar. Dadurch ist die Rodeleistung wiederum insofern erhöht, als dass die Wahrscheinlichkeit von Ausfällen der Rodevorrichtung minimiert ist.

Bevorzugt wird die Rodescharhalterung durch die Führungsanordnung, insbesondere durch die genannten Führungslager, relativ zum Rodevorrichtungsrahmen zwangsgeführt. Dadurch bewegt sich im Betrieb die Rodescharhalterung relativ zum Rodevorrichtungsrahmen auf einer geometrisch definierten und relativ zum Rodevorrichtungsrahmen insbesondere ortsfesten Bewegungsbahn, die insbesondere spiegelsymmetrisch zur Rahmenlängsachse ist. Dadurch sind sowohl Hackfrüchte durch die Rodevorrichtung in einem besonders weiten Bereich aufzunehmen, als auch Stöße, d. h. kurzweilige, große Kräfte, auf die Rodescharhalterung und damit auf den Rodevorrichtungsrahmen zu vermeiden.

Bevorzugt ist zumindest ein Führungslager in Roderichtung vor dem im Betrieb in der Ausgangsstellung am tiefsten in den Boden eindringenden Rodescharteil angeordnet. Insbesondere sind sämtliche Führungslager der Führungsanordnung dabei vor diesem Rodescharteil angeordnet. Insbesondere ist alternativ oder ergänzend dazu die gesamte Führungsanordnung einschließlich eines bzw. sämtlicher Führungslager in Roderichtung vor einer Scharrotationsachse, um die im Betrieb das Rodeschar relativ zur Rodescharhalterung rotiert, angeordnet. Durch die Anordnung der Führungslager im vorderen Bereich der Rodescharhalterung ist es erleichtert, durch die Führungslager eine Zugkraft auf die Rodescharhalterung zu übertragen, wodurch im Betrieb eine besonders einfache Führung der Rodescharhalterung sowie des Rodeschares entlang der zu rodenden Reihe von Hackfrüchten erreicht ist. Insbesondere stellt sich die Rodescharhalterung im Betrieb durch diese Form der Lagerung anhand einer einfachen Konstruktion selbstständig in Querrichtung ein, wodurch keine aktive Verstellung dazu notwendig ist. Bevorzugt fungiert ein in Roderichtung hinteres Führungslager als Stützlager, durch das im Betrieb eine Druckkraft von der Rodescharhalterung auf den Rodevorrichtungsrahmen abgestützt wird, wobei die vom Rodevorrichtungsrahmen auf die Rodescharhalterung übertragene Zugkraft, die insbesondere durch eine Mehrzahl von Führungslagern übertragen wird, betragsmäßig insbesondere größer ist. Die Abweichung ist dabei begründet durch die entgegen der Roderichtung auf das Rodeschar wirkende Rodewiderstandskraft, die insbesondere im Betrieb eine automatische Rückstellung der Rodescharhalterung in die Ausgangsstellung ermöglicht. Durch diese Anordnung des Führungslagers bzw. der Führungslager ist somit eine besonders einfache Funktion der Rodevorrichtung erreicht und insbesondere komplexe, insbesondere sowohl auf Zug als auch auf Druck belastete und somit mit einem hohen Ausfallrisiko behaftete Bauteile vermieden.

In einer vorteilhaften Ausgestaltung der Erfindung umfasst die Führungsanordnung zumindest ein Führungselement, das mittels Führungslagern sowohl mit der Rodescharhalterung als auch mit dem Rodevorrichtungsrahmen gekoppelt ist. Die Führungslager sind dabei wiederum bevorzugt als Gelenklager ausgebildet. Das Führungselement ist insbesondere als Koppelstange zwischen dem Rodevorrichtungsrahmen und der Rodescharhalterung ausgebildet, die sowohl relativ zur Rodescharhalterung als auch relativ zum Rodevorrichtungsrahmen beweglich ist. Insbesondere umfasst die Führungsanordnung zumindest ein insbesondere als Gelenklager ausgebildetes Führungslager, durch das die Rodescharhalterung unmittelbar an dem Rodevorrichtungsrahmen gelagert wird, sowie zumindest ein Führungselement mit beiderseitigen, insbesondere als Gelenklagern ausgebildeten Führungslagern, durch das die Rodescharhalterung mittelbar an dem Rodevorrichtungsrahmen gelagert ist. Durch die Verwendung des Führungselementes wird durch ein im Betrieb einzig auf Zug belastetes Bauteil eine vergrößerte Beweglichkeit sowie eine zuverlässige Führung der Rodescharhalterung in die Versatzstellung erreicht und somit die Ausfallwahrscheinlichkeit weiter reduziert.

Besonders bevorzugt ist das Führungslager zur Verbindung des Führungselementes mit dem Rodevorrichtungsrahmen in Roderichtung vor und relativ zu einer Horizontalen oberhalb des jeweiligen Führungslagers angeordnet, das zur Verbindung des Führungselementes mit der Rodescharhalterung dient. Das Führungselement erstreckt sich dadurch in Roderichtung ansteigend. Dadurch wird im Betrieb die Zugkraft vom Rodevorrichtungsrahmen auf möglichst direktem Wege über das Führungselement auf den Rodevorrichtungsrahmen übertragen, wodurch die Ausfallwahrscheinlichkeit der beteiligten Bauteile minimiert ist.

Vorzugsweise umfasst die Führungsanordnung zwei Führungselemente, die zumindest in der Ausgangsstellung zumindest abschnittsweise, insbesondere vollständig, zu unterschiedlichen Seiten der Rahmenlängsebene und bevorzugt relativ dazu gespiegelt angeordnet sind. Insbesondere verlaufen beide Führungselemente dabei in der Ausgangsstellung parallel zueinander und bilden dadurch bevorzugt eine Parallelführung aus. Eine Parallelverschiebung wird im Betrieb dabei insbesondere überlagert durch zumindest eine Schwenkbewegung. Alternativ bilden die Führungselemente bevorzugt ein Trapez aus.

Bevorzugt stimmen die Führungselemente hinsichtlich ihrer Geometrie überein oder sind spiegelverkehrt zueinander ausgebildet. Durch die Verwendung der zwei Führungselemente, die insbesondere vor dem im Betrieb in der Ausgangsstellung am tiefsten in den Erdboden eindringenden Rodescharteil angeordnet sind, ist eine konstruktiv einfache Führung der Rodescharhalterung zu realisieren, durch die auf simple Weise je eine anteilige Verschwenkung der Rodescharhalterung um alle drei Raumachsen ermöglicht ist. Insbesondere durch eine zusätzliche Lagerung der Rodescharhalterung unmittelbar an dem Rodevorrichtungsrahmen, bevorzugt durch ein in der Rahmenlängsebene angeordnetes Gelenklager, lässt sich eine besonders stabile Führung der Rodescharhalterung realisieren, durch die durch ein Mindestmaß an Aufwand eine große Beweglichkeit des Rodeschares erreicht ist.

In einer vorteilhaften Ausgestaltung der Erfindung sind die Führungselemente längenvariabel ausgebildet und umfassen insbesondere ein Rückstellelement und/oder ein Dämpfungselement. Dadurch sind die Rodeschare im Betrieb nachgiebig gelagert und im Betrieb in zumindest zwei unterschiedliche Richtungen beweglich. Durch die Nachgiebigkeit ist ein schonenderer Umgang der Rodeschare mit den zu erntenden Hackfrüchten erreicht, insbesondere werden unbeabsichtigte Schnitte der Hackfrüchte durch das Rodeschar dadurch verhindert, dass eine zwischen Rodeschar und Hackfrucht wirkende Kraft eine zumindest teilweise und/oder temporäre Rückstellung der Rodescharhalterung bewirkt. Somit ist der Anteil beschädigt geernteter Hackfrüchte reduziert und die Menge pro Zeit zu rodender unbeschädigter Hackfrüchte erhöht.

Alternativ dazu hat die Rodescharhalterung relativ zum Rodevorrichtungsrahmen bevorzugt genau einen Freiheitsgrad. Dabei ist sowohl die Rodescharhalterung als auch das Rodeschar relativ zum Rodevorrichtungsrahmen entlang einer geometrisch definierten Bewegungsbahn beweglich. Durch diese Ausbildung der Rodevorrichtung ist die Anzahl beweglicher Teile zugunsten einer stabileren Konstruktion reduziert und somit die Funktionssicherheit erhöht.

Bevorzugt sind an der Rodescharhalterung zwei, insbesondere in der Ausgangsstellung an der Rahmenlängsebene gespiegelt angeordnete und bevorzugt im Betrieb rotierende Rodeschare angeordnet. Die Rodeschare sind dabei insbesondere im Betrieb rotierende Sechscheiben. Insbesondere sind die Scharrotationsachsen nicht identisch oder parallel zueinander, sondern insbesondere zueinander verkippt, wobei sich beide Scharrotationsachsen bei Anordnung der Rodescharhalterung in der Ausgangsstellung bevorzugt in der Rahmenlängsebene schneiden. Die Rodeschare haben betrachtet in Richtung der zugehörigen Scharrotationsachsen dabei insbesondere einen im Wesentlichen runden Umfang und bevorzugt einen Querschnitt, der zumindest anteilig axial verläuft.

Die beiden sich gegenüberliegenden Rodeschare bilden einen Spalt zwischen sich aus, der entlang des Umfangs der Rodeschare bzw. entlang des Umlaufs derer variiert. Insbesondere ist der Spalt entlang der Umlaufrichtung zwischen dem Aufnahmebereich und dem Auswurfbereich beider Rodeschare am engsten, insbesondere in Roderichtung hinter der Scharrotationsachse und in vertikaler Richtung unterhalb der Lagerpunkte. Der Aufnahmebereich ist vorzugsweise ebenso wie der Auswurfbereich beider Rodeschare ortsfest relativ zur Rodescharhalterung. Im Betrieb laufen die zu rodenden Hackfrüchte relativ zur Rodescharhalterung in den Spalt zwischen den beiden Rodescharen ein, der sich in Rotationsrichtung der Rodeschare verengt und dabei Kontakt zur unteren, sich verjüngenden Hälfte der Hackfrucht aufbaut und diese bei der Aufwärtsbewegung des die Hackfrucht kontaktierenden Rodescharteils aus dem Erdboden anhebt. Nachdem sich der Spalt in Rotationsrichtung daraufhin erweitert hat, verlässt die Hackfrucht den Raum zwischen beiden Rodescharen vom Auswurfbereich dieser. Durch diese Ausbildung und Anzahl von an der Rodescharhalterung angeordneten Rodescharen ist ein besonders zuverlässiges Aufnehmen der Hackfrüchte aus dem Erdboden ermöglicht und ein schonender Umgang damit realisiert.

In einer vorteilhaften Ausgestaltung der Erfindung hat die Rodevorrichtung ein Auswurfelement zur Trennung der aufgenommenen Hackfrüchte von den Rodescharen, insbesondere von deren Auswurfbereichen. Das Auswurfelement ist insbesondere am Rodevorrichtungsrahmen gelagert und im Betrieb umlaufend und insbesondere durch den Zwischenraum der beiden Rodeschare hindurchverlaufend. Insbesondere ist das Auswurfelement als um eine quer zur Roderichtung und horizontal angeordnete Auswurfrotationsrichtung umlaufendes Schaufelrad ausgebildet. Dabei ist die Breite der sich von der Auswurfrotationsachse radial erstreckenden Auswurfschaufeln geringer als der Spalt zwischen den Auswurfbereichen der Rodeschare. Das Auswurfelement ist bei einer Bewegung der Rodescharhalterung aus der Ausgangsstellung oder in die Ausgangsstellung zurück insbesondere nicht in die Querrichtung beweglich. Vorteil der Verwendung des Auswurfelementes ist ein kontinuierlicher Strom von Hackfrüchten, der im Betrieb von der Rodevorrichtung an ein nachfolgendes Förderelement übergeben wird, wobei durch die vorbeschriebene Bewegung der Rodescharhalterung relativ zum Rodevorrichtungsrahmen das Auswurfelement mit sich besonders weit in die Querrichtung erstreckenden Auswurfschaufeln verwendbar ist, da die Auswurfbereiche sich bei der Bewegung der Rodescharhalterung nur geringfügig in die Querrichtung bewegen. Dadurch ist zusätzlich zur weitreichenden Verstellbarkeit des Rodeschares in die Querrichtung ein optimaler Umgang mit den Hackfrüchten eine zuverlässige Weiterförderung derer gewährleistet.

Insbesondere umfasst die Rodevorrichtung ein Stellmittel, insbesondere einen Hydraulikzylinder, durch das die Rodescharhalterung in eine vertikale Richtung verstellbar und somit aus dem Erdboden auszuheben ist. Dazu umfasst der Rodevorrichtungsrahmen insbesondere einen Kipphebel, welcher um eine sich in Querrichtung erstreckende Kipphebelachse verkippbar ist. An dem Kipphebel ist insbesondere einerseits die Rodescharhalterung mittels eines Gelenklagers angeordnet und andererseits das Stellmittel angeordnet. Dadurch lässt sich ein Anheben der Rodescharhalterung mit dem zumindest einen Rodeschar mit einer konstruktiv einfachen Lösung und somit besonders zuverlässig realisieren.

Die Aufgabe wird weiterhin durch eine mobile Erntemaschine mit einem Antriebsaggregat umfassend eine vorbeschriebene Rodevorrichtung gelöst. Die Erntemaschine ist insbesondere zum Ernten von Hackfrüchten wie Rüben, Kartoffeln oder Karotten ausgebildet und hat bevorzugt zumindest drei im Betrieb umlaufende und auf den Erdboden aufstehende Aufstandselemente wie Reifen oder Ketten, ein Führerhaus, einen Bunker zur Lagerung zur Hackfrüchte und/oder ein Antriebsaggregat. Die Rodevorrichtung ist insbesondere in Roderichtung vor den Aufstandselementen angeordnet und damit im Betrieb vorlaufend.

Vorteil der erfindungsgemäßen Ausbildung der Rodevorrichtung für den Betrieb der Erntemaschine ist vor allem ein insgesamt geringerer, bei lokalen Kurvenfahrten zu überwindender Fahrwiderstand. Gemäß dem Stand der Technik erreicht die Rodescharhalterung schon ab geringen Abweichungen der zu erntenden Reihe von Hackfrüchten einen seitlichen Anschlag, die eine weitere Auslenkung des Rodeschars verhindert. Für eine Kurvenfahrt bzw. Lenkbewegung der Erntemaschine ist, wenn sich die Rodescharhalterung bereits am entsprechenden Anschlag befindet, eine massive Kraft aufzuwenden, da der zumindest eine Rodeschar dabei anteilig quer durch den Erdboden zu bewegen ist. Durch die erfindungsgemäße Führung und relativ zum Rodevorrichtungsrahmen größere Bewegungsfreiheit des Aufnahmebereichs des Rodeschars sind diese erhöhten Kräfte im Betrieb kaum noch notwendig und sind die damit einhergehenden Belastungen weitgehend vermieden. Dadurch ist das Ausfallrisiko der Erntemaschine reduziert.

Durch den vorbeschriebenen Vorteil der Erfindung wird insbesondere die Anwendung von insbesondere GPS-abhängigen Lenksystemen bzw. -assistenten erleichtert. Die bei diesen im Betrieb nicht zu vermeidenden lokalen Abweichungen von einer von den Verläufen zu erntender Reihen von Hackfrüchten abhängigen, optimalerweise zu fahrenden Ideallinie schränkt das Rodeergebnis insofern nicht weiter ein, als dass der zumindest eine Aufnahmebereich der von ihm aufzunehmenden Reihe in einem besonders weiten Bereich seitlich folgen kann. Durch ebenfalls bei den Lenksystemen bzw. -assistenten notwendige Korrekturlenkungen erreicht die Rodescharhalterung in der Praxis keinen Anschlag mehr, wodurch der bei Lenkungen bzw. Kurvenfahrten zu überwindende, auf das in den Erdboden eindringende Rodeschar zurückgehende Fahrwiderstand deutlich reduziert ist.

Weitere Einzelheiten und Vorteile der Erfindung sind den nachfolgend beschriebenen, schematisch dargestellten Ausführungsbeispielen zu entnehmen; es zeigen:
- Fig. 1: eine Seitenansicht einer erfindungsgemäßen Erntemaschine,
- Fig. 2: eine vergrößerte Darstellung des vorderen Teils der Erntemaschine gemäß Fig. 1,
- Fig. 3: eine isometrische Darstellung des vorderen Teils der Erntemaschine gemäß Fig. 2,
- Fig. 4: eine isometrische, schematische Darstellung einer erfindungsgemäßen Rodevorrichtung,
- Fig. 5: eine Seitenansicht einer erfindungsgemäßen Rodevorrichtung,
- Fig. 6 und Fig. 7: isometrische Darstellungen der Rodevorrichtung gemäß Fig. 5,
- Fig. 8: eine Frontansicht der Rodevorrichtung gemäß Fig. 5 im Betrieb,
- Fig. 9 und Fig. 10: isometrische Darstellungen der Rodevorrichtung gemäß Fig. 5 im Betrieb.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

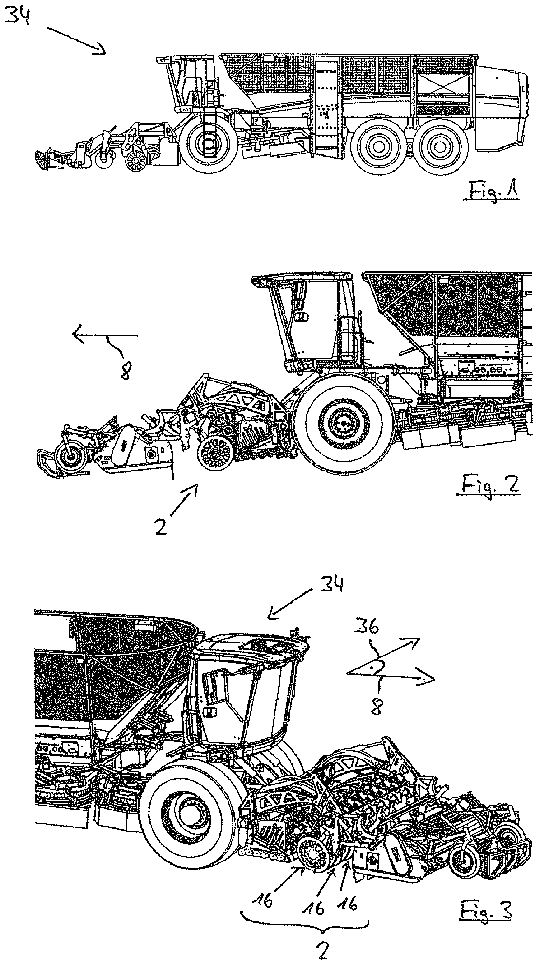

Die Fig. 1 bis 3 zeigen eine erfindungsgemäße Erntemaschine 34 mit einer erfindungsgemäßen Rodevorrichtung 2. Die Rodevorrichtung 2 ist dabei im Betrieb in Roderichtung 8 relativ zu den Rädern der Erntemaschine 34 vorlaufend. Die Rodevorrichtung 2 umfasst eine Mehrzahl von in einer zur Roderichtung 8 rechtwinkligen Querrichtung 36 hintereinander angeordneten Rodescharhalterungen 16 mit je zwei Rodescharen 6.

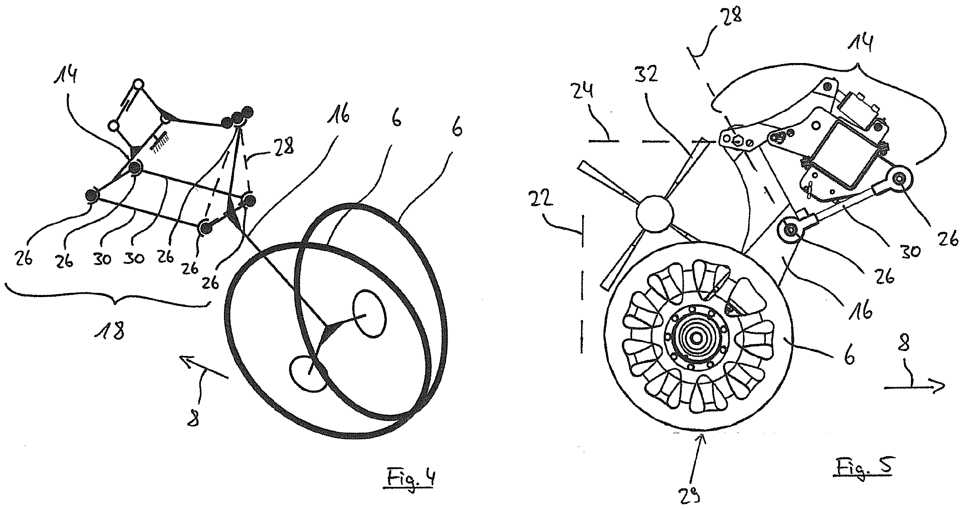

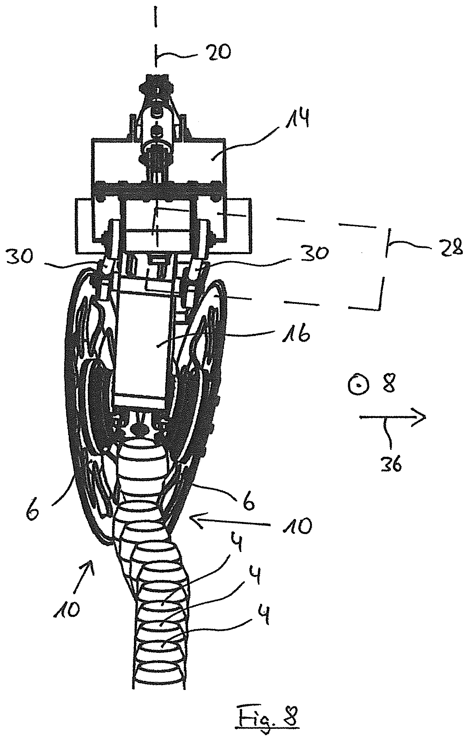

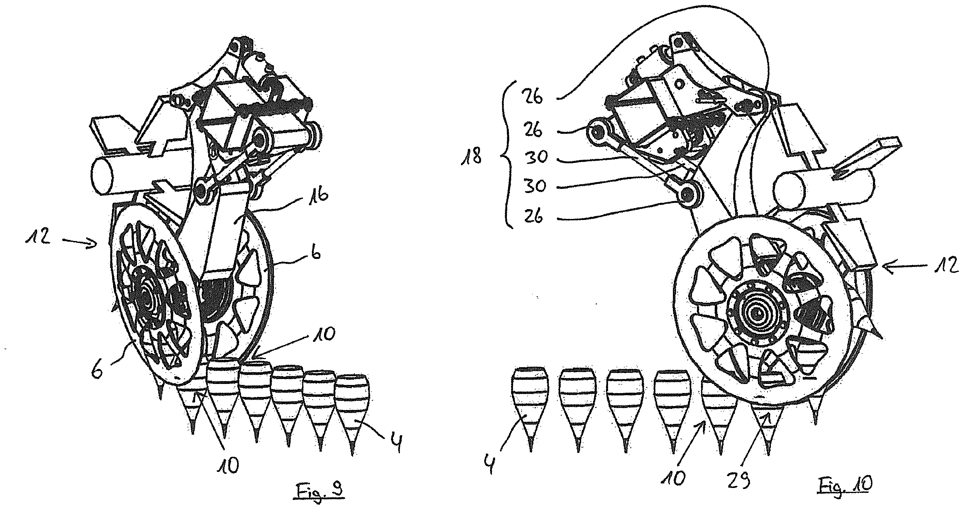

Die Fig. 4 bis 10 zeigen die erfindungsgemäße Rodevorrichtung 2 in unterschiedlichen Darstellungen und aus unterschiedlichen Perspektiven. Die dargestellte Rodevorrichtung 2 umfasst eine Rodescharhalterung 16 mit zwei Rodescharen 6. Die Rodeschare 6 haben einen in Roderichtung 8 vorderen Aufnahmebereich 10 sowie einen Roderichtung 8 hinteren Auswurfbereich 12 (vergl. Fig. 8 bis 10). Im Betrieb bewegt sich die Rodevorrichtung 2 in die Roderichtung 8 fort, wobei die Hackfrüchte 4 zwischen die Aufnahmebereiche 10 der Rodeschare 6 gelangen. Durch eine Rotation der Rodeschare 6 werden die Hackfrüchte 4 dabei aus der Erde ausgehoben und verlassen den Zwischenraum zwischen den beiden Rodescharen 6 anschließend von den Auswurfbereichen 12 der Rodeschare 6.

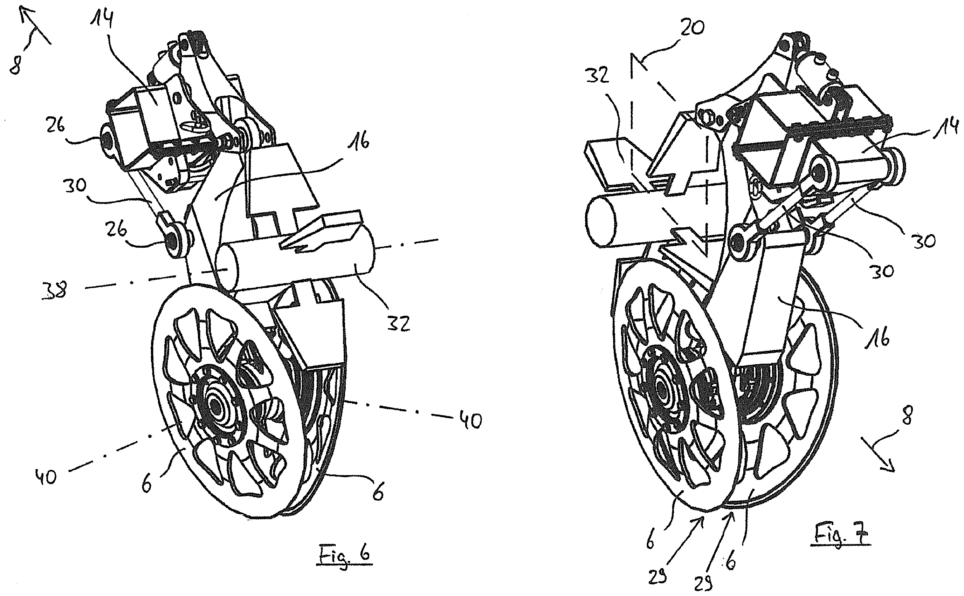

Beide Rodeschare 6 sind relativ zur Rodescharhalterung 16 drehbar gelagert und in einer Ausgangsstellung der Rodevorrichtung 2 relativ zu einer Rahmenlängsachse 20 (vergl. Fig. 7 und 8) spiegelsymmetrisch angeordnet. Die Scharrotationsachsen 40 (vergl. Fig. 6) sind jeweils um einen Winkel < 90° gegenüber der Rahmenlängsachse 20 spiegelgleich verschwenkt und schneiden sich entsprechend in der Rahmenlängsachse 20.

Die Rodescharhalterung 16 ist mittels der Führungsanordnung 18 mit dem Rodevorrichtungsrahmen 14 gekoppelt, wobei die Rodescharhalterung 16 im Betrieb von dem Rodevorrichtungsrahmen 14 gezogen wird. Die Führungsanordnung 18 ermöglicht eine seitliche Auslenkung der Rodescharhalterung 16 bei Betrachtung derer in Roderichtung 8 und relativ zum Rodevorrichtungsrahmen 14. Dadurch ist der Rodevorrichtungsrahmen 14 aus einer Ausgangsstellung (vergl. Fig. 4 bis 7) in eine Versatzstellung (vergl. Fig. 8) beweglich.

Die Führungsanordnung 18 ist derart ausgebildet, dass bei der Bewegung der Rodescharhalterung 16 aus der Ausgangsstellung in die Versatzstellung der Aufnahmebereich 10 seitlich weiter verlagert wird als der Auswurfbereich 12. Dazu wird die Rodescharhalterung 16 bei der Bewegung aus der Ausgangsstellung in die Versatzstellung zumindest anteilig um eine Schwenkachse 22 verschwenkt, die relativ zu einer Horizontalen verschwenkt, insbesondere rechtwinklig, und in der vertikalen Rahmenlängsebene 20 angeordnet ist. Außerdem kippt die Rodescharhalterung 16 bei der Bewegung aus der Ausgangsstellung in die Versatzstellung zumindest anteilig um eine zur Roderichtung 8 parallele Kippachse 24, die in Roderichtung 8 betrachtet oberhalb des Rodeschares 6 angeordnet ist. Fig. 5 ist eine aus einer zur Rahmenlängsebene 20 rechtwinkligen Perspektive aufgenommene Seitenansicht und verdeutlicht die Positionen der Schwenkachse 22 sowie der Kippachse 24.

Die Führungsanordnung 18 umfasst in den durch die Fig. 4 bis 10 dargestellten Ausführungsbeispielen insgesamt fünf als Gelenklager ausgebildete Führungslager 26, wobei die Rodescharhalterung 16 unmittelbar mittels dreier Führungslager 26 gelagert ist. Diese drei Führungslager 26 spannen eine Lagerebene 28 auf, die zur Rahmenlängsebene 20 verschwenkt ist (vergl. Fig. 4). Neben den Führungslagern 26 umfasst die Führungsanordnung 18 zwei als Koppelstangen ausgebildete Führungselemente 30, welche beidseitig durch je ein Führungslager 26 mit der Rodescharhalterung 16 und mit dem Rodevorrichtungsrahmen 14 gekoppelt sind. Die Führungselemente 30 sind in der Ausgangsstellung zu unterschiedlichen Seiten der Rahmenlängsachse 20 angeordnet und dazu insbesondere parallel. Dasjenige der drei Führungslager 26, das nicht durch eine der Führungselemente 30 mitausgebildet wird, ist mittig, d. h. innerhalb der Rahmenlängsachse 20, angeordnet.

Sämtliche Führungslager 26 sind in Roderichtung 8 vor dem im Betrieb in der Ausgangsstellung am tiefsten in den Boden eindringenden Rodescharteil 29 (vergl. Fig. 5) angeordnet. Durch die Führungselemente 30 werden somit im Betrieb Zugkräfte von dem Rodevorrichtungsrahmen 14 auf die Rodescharhalterung 16 übertragen.

Das dargestellte Ausführungsbeispiel hat ein im Betrieb durch den Zwischenraum der Rodeschare 6 kämmendes Auswurfelement 32 (vergl. Fig. 6 und 7). Das als Schaufelrad ausgebildete Auswurfelement 32 rotiert im Betrieb um eine Auswurfrotationsachse 38, die unabhängig von der Stellung der Rodescharhalterung 16 im Betrieb rechtwinklig zur Rahmenlängsachse 20 angeordnet ist.

Die Führungsanordnung 18 bewirkt, dass im Betrieb die Rodescharhalterung 16 mit den Rodenscharen 6 einer zu rodenden Reihe von Hackfrüchten 4 folgen kann, auch wenn diese Reihe sich nicht exakt in Roderichtung 8 erstreckt. Bei der Bewegung der Rodescharhalterung 16 aus der Ausgangsstellung in die Versatzstellung wird die Rodescharhalterung 16 um alle drei Raumachsen verschwenkt und insbesondere der Aufnahmebereich 10 weiter seitlich bewegt als der Auswurfbereich 12 (vergl. Fig. 8). Dadurch lassen sich auch relativ weit seitlich von der Rahmenlängsachse 20 positionierte Hackfrüchte 4 durch die Rodevorrichtung 2 aufnehmen und trotzdem das nicht verschiebliche Auswurfelement 32 zum Auswerfen der Hackfrüchte 4 aus dem Zwischenraum der Rodeschare 6 nutzen. Dadurch, dass die Rodeschare 6 sich bei der Bewegung aus der Ausgangsstellung in die Versatzstellung in Roderichtung 8 verschieben, kommt es bei ausbleibenden Hackfrüchten 4 aufgrund einer der Roderichtung 8 entgegen gerichteten Rodewiderstandskraft zu einer automatischen Rückstellung der Rodescharhalterung 16 in die Ausgangsstellung.

## Patentansprüche

1. Rodevorrichtung zum Roden von Hackfrüchten (4), aufweisend mindestens eine zumindest einen Rodeschar (6), der einen in eine Roderichtung (8) vorderen Aufnahmebereich (10) und einen in der Roderichtung (8) hinteren Auswurfbereich (12) für die Hackfrüchte (4) hat, abstützende, mit einem Rodevorrichtungsrahmen (14) gekoppelte und im Betrieb davon in die Roderichtung (8) gezogene Rodescharhalterung (16), die relativ zum Rodevorrichtungsrahmen (14) und betrachtet in Roderichtung (8) aus einer Ausgangsstellung seitlich in eine Versatzstellung bewegbar ist, **gekennzeichnet durch** eine zur Führung der Rodescharhalterung (16) derart ausgebildete Führungsanordnung (18), dass bei der Bewegung der Rodescharhalterung (16) aus der Ausgangsstellung in die Versatzstellung der Aufnahmebereich (10) seitlich weiter verlagert wird als der Auswurfbereich (12), wobei die Rodescharhalterung (16) bei der Bewegung aus der Ausgangsstellung in die Versatzstellung zumindest anteilig um eine relativ zu einer Horizontalen verschwenkte und in einer vertikalen Rahmenlängsebene (20) in Roderichtung (8) hinter der Rodescharhalterung (16) angeordnete Schwenkachse (22) schwenkt und zumindest anteilig um eine zur Roderichtung (8) parallele Kippachse (24) kippt.

2. Rodevorrichtung nach Anspruch 1, **dadurch gekennzeichnet, dass** die Schwenkachse (22) relativ zur Horizontalen rechtwinklig angeordnet ist oder als Diagonalschwenkachse ausgebildet ist, die zumindest in der Ausgangsstellung in der Rahmenlängsebene (20) liegt und in eine Förderrichtung ansteigt und insbesondere zumindest im Wesentlichen rechtwinklig zu einer Geraden angeordnet ist, welche den Aufnahmebereich und den Auswurfbereich des Rodeschares in der Ausgangsstellung schneidet.

3. Rodevorrichtung nach Anspruch 1 oder 2, **dadurch gekennzeichnet, dass** die Kippachse (24) in Roderichtung (8) betrachtet oberhalb des Rodeschares (6) angeordnet ist.

4. Rodevorrichtung nach einem der vorhergehenden Ansprüche, **dadurch gekennzeichnet, dass** die Rodescharhalterung (16) bei der Bewegung aus der Ausgangsstellung in die Versatzstellung zumindest abschnittsweise in Roderichtung (8) verlagert wird.

5. Rodevorrichtung nach einem der vorhergehenden Ansprüche, **dadurch gekennzeichnet, dass** die Führungsanordnung (18) mehrere insbesondere als Gelenklager ausgebildete Führungslager (26) zwischen der Rodescharhalterung (16) und dem Rodevorrichtungsrahmen (14) umfasst.

6. Rodevorrichtung nach Anspruch 5, **dadurch gekennzeichnet, dass** die Rodescharhalterung (16) mittels drei Führungslagern (26) gelagert ist, die zumindest in der Ausgangsstellung eine Lagerebene (28) aufspannen, die zu einer Rahmenlängsebene (20) verschwenkt ist.

7. Rodevorrichtung nach Anspruch 5 oder 6, **dadurch gekennzeichnet, dass** zumindest ein, insbesondere sämtliche Führungslager (26) in Roderichtung (8) vor dem im Betrieb in der Ausgangsstellung am tiefsten in den Boden eindringenden Rodescharteil (9) angeordnet sind.

8. Rodevorrichtung nach einem der Ansprüche 5 bis 7, **dadurch gekennzeichnet, dass** die Führungsanordnung (18) zumindest ein mittels Führungslagern (26) mit der Rodescharhalterung (16) und dem Rodevorrichtungsrahmen (14) gekoppeltes Führungselement (30) umfasst.

9. Rodevorrichtung nach Anspruch 8, **dadurch gekennzeichnet, dass** eines der Führungslager (26) zur Verbindung des Führungselementes (30) mit dem Rodevorrichtungsrahmen (14) in Roderichtung (8) vor und relativ zu einer Horizontalen oberhalb eines anderen der Führungslager (26) zur Verbindung des Führungselementes (30) mit der Rodescharhalterung (16) angeordnet ist.

10. Rodevorrichtung nach Anspruch 8 oder 9, **dadurch gekennzeichnet, dass** die Führungsanordnung (18) zwei Führungselemente (30) umfasst, die zumindest in der Ausgangsstellung zumindest abschnittsweise, insbesondere vollständig zu unterschiedlichen Seiten einer Rahmenlängsebene (20) und bevorzugt relativ dazu gespiegelt angeordnet sind.

11. Rodevorrichtung nach einem der Ansprüche 8 bis 10, **dadurch gekennzeichnet, dass** die Führungselemente (30) längenvariabel ausgebildet sind und insbesondere ein Rückstellelement und/oder ein Dämpfungselement umfassen.

12. Rodevorrichtung nach einem der Ansprüche 1 bis 10, **dadurch gekennzeichnet, dass** die Rodescharhalterung (16) relativ zum Rodevorrichtungsrahmen (14) genau einen Freiheitsgrad hat.

13. Rodevorrichtung nach einem der vorhergehenden Ansprüche, **dadurch gekennzeichnet, dass** an der Rodescharhalterung (16) zwei, insbesondere in der Ausgangsstellung an der Rahmenlängsebene (20) gespiegelt angeordnete und bevorzugt im Betrieb rotierende Rodeschare (6) angeordnet sind.

14. Rodevorrichtung nach einem der vorhergehenden Ansprüche, **gekennzeichnet durch** ein am Rodevorrichtungsrahmen (14) gelagertes und im Betrieb umlaufendes und insbesondere teilweise durch einen Zwischenraum zweier von derselben Rodescharhalterung (16) abgestützter Rodeschare (6) verlaufendes Auswurfelement (32) zur Trennung der aufgenommenen Hackfrüchte (4) von den Rodescharen (6).

15. Erntemaschine (34), insbesondere zum Ernten von Rüben, aufweisend ein Antriebsaggregat umfassend eine Rodevorrichtung (2) nach einem der vorhergehenden Ansprüche.

## Claims

1. Lifting device for lifting root crops (4), comprising at least one lifting share mounting (16) which supports at least one lifting share (6) which has a front pick-up region (10) in a lifting direction (8) and a rear ejection region (12) in the lifting direction (8) for the root crops (4), which is coupled to a lifting device frame (14) and during operation is pulled thereby in the lifting direction (8), said lifting share mounting being movable relative to the lifting device frame (14) and, viewed in the lifting direction (8), laterally from an initial position into an offset position, **characterized by** a guide arrangement (18) which is configured to guide the lifting share mounting (16) such that with the movement of the lifting share mounting (16) from the initial position into the offset position the pick-up region (10) is laterally displaced further than the ejection region (12), wherein the lifting share mounting (16), with the movement from the initial position into the offset position, pivots at least partially about a pivot axis (22) which is pivoted relative to the horizontal and which is arranged in a vertical frame longitudinal plane (20) in the lifting direction (8) behind the lifting share mounting (16), and tilts at least partially about a tilt axis (24) parallel to the lifting direction (8).

2. Lifting device according to Claim 1, **characterized in that** the pivot axis (22) is arranged at right angles relative to the horizontal or is configured as a diagonal pivot axis which at least in the initial position is located in the frame longitudinal plane (20) and rises in a conveying direction and in particular is arranged at least substantially at right angles to a straight line which intersects the pick-up region and the ejection region of the lifting share in the initial position.

3. Lifting device according to Claim 1 or 2, **characterized in that** viewed in the lifting direction (8) the tilt axis (24) is arranged above the lifting share (6) .

4. Lifting device according to one of the preceding claims, **characterized in that** the lifting share mounting (16) is displaced at least partially in the lifting direction (8), with the movement from the initial position into the offset position.

5. Lifting device according to one of the preceding claims, **characterized in that** the guide arrangement (18) comprises a plurality of guide bearings (26) which are configured, in particular, as spherical bearings between the lifting share mounting (16) and the lifting device frame (14).

6. Lifting device according to Claim 5, **characterized in that** the lifting share mounting (16) is mounted by means of three guide bearings (26) which span a bearing plane (28) which is pivoted relative to a frame longitudinal plane (20) at least in the initial position.

7. Lifting device according to Claim 5 or 6, **characterized in that** at least one, in particular all, guide bearings (26) are arranged in the lifting direction (8) upstream of the lifting share part (9) which during operation penetrates the lowest point in the soil in the initial position.

8. Lifting device according to one of Claims 5 to 7, **characterized in that** the guide arrangement (18) comprises at least one guide element (30) which is coupled by means of guide bearings (26) to the lifting share mounting (16) and to the lifting device frame (14).

9. Lifting device according to Claim 8, **characterized in that** one of the guide bearings (26) for connecting the guide element (30) to the lifting device frame (14) is arranged upstream in the lifting direction (8) and relative to the horizontal above a further of the guide bearings (26) for connecting the guide element (30) to the lifting share mounting (16).

10. Lifting device according to Claim 8 or 9, **characterized in that** the guide arrangement (18) comprises two guide elements (30) which at least in the initial position are arranged at least partially, in particular entirely, on different sides of a frame longitudinal plane (20) and preferably as a mirror image relative thereto.

11. Lifting device according to one of Claims 8 to 10, **characterized in that** the guide elements (30) are configured to be variable in terms of length and comprise, in particular, a return element and/or a damping element.

12. Lifting device according to one of Claims 1 to 10, **characterized in that** the lifting share mounting (16) has just one degree of freedom relative to the lifting device frame (14).

13. Lifting device according to one of the preceding claims, **characterized in that** two lifting shares (6) are arranged on the lifting share mounting (16), in particular said lifting shares being arranged as a mirror image in the initial position on the frame longitudinal plane (20) and preferably rotating during operation.

14. Lifting device according to one of the preceding claims, **characterized by** an ejection element (32) mounted on the lifting device frame (14) and circulating during operation and, in particular, partially running through an intermediate space of two lifting shares (6) supported by the same lifting share mounting (16), for separating the picked-up root crops (4) from the lifting shares (6).

15. Harvesting machine (34), in particular for harvesting beets, comprising a drive unit comprising a lifting device (2) according to one of the preceding claims

## Revendications

1. Dispositif d'arrachage pour l'arrachage de plantes sarclées (4), présentant au moins un support de soc d'arrachage (16) soutenant au moins un soc d'arrachage, qui a une zone de réception (10) avant dans une direction d'arrachage (8) et une zone d'éjection (12) arrière dans la direction d'arrachage (8) pour les plantes sarclées (4), couplé à un cadre de dispositif d'arrachage (14) et tiré dans la direction d'arrachage (8) pendant le fonctionnement de celui-ci, lequel support peut être déplacé latéralement par rapport au cadre de dispositif d'arrachage (14) et, vu dans la direction d'arrachage (8), d'une position initiale dans une position décalée, **caractérisé par** un agencement de guidage (18) réalisé pour guider le support de soc d'arrachage (16), de telle sorte que lors du déplacement du support de soc d'arrachage (16) de la position initiale à la position décalée, la zone de réception (10) est transférée latéralement plus loin que la zone d'éjection (12) ; lors du déplacement de la position initiale à la position décalée, le support de soc d'arrachage (16) pivotant au moins proportionnellement autour d'un axe de pivotement (22) pivoté par rapport à une horizontale et agencé dans un plan longitudinal de cadre vertical (20) derrière le support de soc d'arrachage (16) dans la direction d'arrachage (8) et basculant au moins proportionnellement autour d'un axe de basculement (24) parallèle à la direction d'arrachage (8).

2. Dispositif d'arrachage selon la revendication 1, **caractérisé en ce que** l'axe de pivotement (22) est agencé à angle droit par rapport à l'horizontale ou est réalisé sous forme d'axe de pivotement diagonal qui, au moins dans la position initiale, se situe dans le plan longitudinal de cadre (20) et monte dans une direction de transport et, notamment, est agencé au moins essentiellement à angle droit par rapport à une ligne droite qui, dans la position initiale, traverse la zone de réception et la zone d'éjection du soc d'arrachage.

3. Dispositif d'arrachage selon la revendication 1 ou 2, **caractérisé en ce que** l'axe de basculement (24) est agencé au-dessus du soc d'arrachage (6), vu dans la direction d'arrachage (8).

4. Dispositif d'arrachage selon l'une quelconque des revendications précédentes, **caractérisé en ce que** le support de soc d'arrachage (16) est transféré au moins par sections dans la direction d'arrachage (8) lors du déplacement de la position initiale à la position décalée.

5. Dispositif d'arrachage selon l'une quelconque des revendications précédentes, **caractérisé en ce que** l'agencement de guidage (18) comprend plusieurs paliers de guidage (26), notamment réalisés sous forme de paliers articulés, entre le support de soc d'arrachage (16) et le cadre de dispositif d'arrachage (14).

6. Dispositif d'arrachage selon la revendication 5, **caractérisé en ce que** le support de soc d'arrachage (16) est monté au moyen de trois paliers de guidage (26) qui, au moins dans la position initiale, définissent un plan de palier (28) qui est pivoté par rapport à un plan longitudinal de cadre (20).

7. Dispositif d'arrachage selon la revendication 5 ou 6, **caractérisé en ce qu'**au moins un, notamment tous les paliers de guidage (26) sont agencés dans la direction d'arrachage (8) avant la partie du soc d'arrachage (9) qui, en fonctionnement, pénètre le plus profondément dans le sol dans la position initiale.

8. Dispositif d'arrachage selon l'une quelconque des revendications 5 à 7, **caractérisé en ce que** l'agencement de guidage (18) comprend au moins un élément de guidage couplé au support de soc d'arrachage (16) et au cadre du dispositif d'arrachage (14) au moyen de paliers de guidage (26).

9. Dispositif d'arrachage selon la revendication 8, **caractérisé en ce que** l'un des paliers de guidage (26) pour la liaison de l'élément de guidage (30) au cadre de dispositif d'arrachage (14) est agencé dans la direction d'arrachage (8) en avant et par rapport à une horizontale au-dessus d'un autre des paliers de guidage (26) pour la liaison de l'élément de guidage (30) au support de soc d'arrachage (16) .

10. Dispositif d'arrachage selon la revendication 8 ou 9, **caractérisé en ce que** l'agencement de guidage (18) comprend deux éléments de guidage (30) qui, au moins dans la position initiale, sont au moins par sections, notamment entièrement, agencés en miroir par rapport à des côtés différents d'un plan longitudinal de cadre (20) et de préférence par rapport à celui-ci.

11. Dispositif d'arrachage selon l'une quelconque des revendications 8 à 10, **caractérisé en ce que** les éléments de guidage (30) sont réalisés de longueur variable et comprennent notamment un élément de rappel et/ou un élément d'amortissement.

12. Dispositif d'arrachage selon l'une quelconque des revendications 1 à 10, **caractérisé en ce que** le support de soc d'arrachage (16) a exactement un degré de liberté par rapport au cadre de dispositif d'arrachage (14).

13. Dispositif d'arrachage selon l'une quelconque des revendications précédentes, **caractérisé en ce que** deux socs d'arrachage (6) agencés en miroir par rapport au plan longitudinal de cadre (20), notamment dans la position initiale, et tournant de préférence en fonctionnement, sont agencés sur le support de soc d'arrachage (16) .

14. Dispositif d'arrachage selon l'une quelconque des revendications précédentes, **caractérisé par** un élément d'éjection (32) monté sur le cadre de dispositif d'arrachage (14) et tournant en fonctionnement et s'étendant notamment partiellement à travers un espace intermédiaire entre deux socs d'arrachage (6) soutenus par le même support de soc d'arrachage (16), pour séparer les plantes sarclées (4) reçues des socs d'arrachage (6).

15. Moissonneuse (34), notamment pour la récolte de betteraves, présentant un groupe d'entraînement comprenant un dispositif d'arrachage (2) selon l'une quelconque des revendications précédentes.
